# EUROPÄISCHE PATENTANMELDUNG

(11) **EP 4 300 684 A1**
(43) Veröffentlichungstag der Anmeldung: **03.01.2024**
(21) Anmeldenummer: 23172801.5
(22) Anmeldetag: 11.05.2023
(51) Int. Cl.: H01M 50/242, H01M 50/249, H01M 50/262, B62M 6/90

(54) **VERBINDUNGSVORRICHTUNG ZUR VERBINDUNG EINES AKKUPACK MIT EINEM VERBRAUCHER, AKKUPACK UND/ODER VERBRAUCHER MIT EINER VERBINDUNGSVORRICHTUNG**

(30) Priorität: 28.06.2022 DE 102022206525
(71) Anmelder: Robert Bosch GmbH, 70442 Stuttgart (DE)
(72) Erfinder: Fanzutti, Sara, 72127 Kusterdingen (DE); Alisic, Haris, 72127 Kusterdingen-Wankheim (DE); Trif, Christian, 72127 Kusterdingen (DE)

(57) **Zusammenfassung**

Die Erfindung betrifft eine Verbindungsvorrichtung zur Verbindung eines Akkupacks mit einem Verbraucher, mit einer Verriegelungseinheit zur Verriegelung des Akkupacks mit dem Verbraucher, wobei die Verriegelungseinheit zumindest ein insbesondere starres Verriegelungselement und zumindest ein bewegliches Verriegelungselement aufweist, und mit einer Dämpfungseinheit, wobei die Dämpfungseinheit zumindest ein erstes Dämpfungselement aufweist, das zur Dämpfung entlang einer Verbindungsrichtung des Akkupacks ausgebildet ist. Es wird vorgeschlagen, dass die Dämpfungseinheit zumindest ein zweites Dämpfungselement aufweist, das zur Dämpfung des Akkupacks ausgebildet ist.

## Beschreibung

### Stand der Technik

In der DE 10 2019 213437 A1 ist eine Haltevorrichtung zur lösbaren Halterung eines Akkumulators an einem Rahmen offenbart.

### Offenbarung der Erfindung

Die Erfindung betrifft eine Verbindungsvorrichtung zur Verbindung eines Akkupacks mit einem Verbraucher, mit einer Verriegelungseinheit zur Verriegelung des Akkupacks mit dem Verbraucher, wobei die Verriegelungseinheit zumindest ein insbesondere starres Verriegelungselement und zumindest ein bewegliches Verriegelungselement aufweist, und mit einer Dämpfungseinheit, wobei die Dämpfungseinheit zumindest ein erstes Dämpfungselement aufweist, das zur Dämpfung entlang einer Verbindungsrichtung des Akkupacks ausgebildet ist. Es wird vorgeschlagen, dass die Dämpfungseinheit zumindest ein zweites Dämpfungselement aufweist, das zur Dämpfung des Akkupacks ausgebildet ist. Vorteilhaft kann dadurch der Verschleiß des Systems wirksam reduziert werden.

Die Verbindungsvorrichtung ist insbesondere dazu ausgebildet, den Akkupack im verbundenen Zustand am Verbraucher zu halten. Die Verbindungsvorrichtung kann Komponenten beziehungsweise Bauteile aufweisen die dem Akkupack und/oder dem Verbraucher zugeordnet sind. Unter Zuordnung soll in diesem Zusammenhang insbesondere verstanden werden, dass die Komponenten der Verbindungsvorrichtung vor der Verbindung an dem Verbraucher oder an dem Gehäuse angeordnet und/oder befestigt und/oder integriert sind. Die Verbindungsvorrichtung ist zur mechanischen, vorzugsweise zur mechanischen und elektrischen, Verbindung des Akkupacks mit dem Verbraucher ausgebildet.

Der Verbraucher kann beispielsweise als ein Fahrzeug, insbesondere ein Elektrofahrrad, eine Elektromotorrad, ein eScooter oder dergleichen ausgebildet sein. Es ist ebenfalls denkbar, dass der Verbraucher als eine Handwerkzeugmaschine, als ein Gartengerät, als ein Haushaltsgerät, wie beispielweise ein Küchengerät oder ein Staubsauger, als ein Messgerät, etc. ausgebildet ist. Unter einem Elektrofahrrad soll im Zusammenhang dieser Anmeldung insbesondere ein Fahrrad verstanden, dass eine Antriebseinheit zur Unterstützung des Fahrers aufweist. Das Elektrofahrrad ist vorzugsweise als ein eBike, ein Pedelec, ein Lastenfahrrad, ein Klappfahrrad oder dergleichen ausgebildet. Die Antriebseinheit weist einen Motor auf, der beispielsweise als ein Mittelmotor oder als ein Nabenmotor ausgebildet sein kann. Der Motor ist vorzugsweise als ein Elektromotor ausgebildet. Die Antriebseinheit ist mit dem Akkupack zur Versorgung der Antriebseinheit mit Energie verbunden. Der Akkupack weist ein Gehäuse auf, das bevorzugt lösbar mit einem Rahmen des Fahrrads verbunden ist. Das Elektrofahrrad umfasst eine Elektronik mit einer Steuereinheit zur Steuerung oder Regelung des Elektrofahrrads. Die Elektronik umfasst vorzugsweise eine Sensoreinheit, wobei die Sensoreinheit beispielsweise Bewegungssensoren, Drehmomentsensoren, Geschwindigkeitssensoren, einen GNSS Empfänger, Magnetsensoren oder dergleichen aufweisen kann. Zudem umfasst die Elektronik vorzugsweise eine Kommunikationsschnittstelle zur drahtlosen Verbindung des Elektrofahrrads mit einer externen Vorrichtung, wie beispielsweise einem Smartphone, und/oder einem Server.

Der Akkupack ist als ein Wechselakkupack ausgebildet, der bevorzugt werkzeuglos lösbar mit dem Verbraucher ausgebildet ist. Der Akkupack ist insbesondere verbindbar mit einer Ladevorrichtung zum Aufladen des Akkupacks ausgebildet. Alternativ oder zusätzlich kann der Akkupack auch derart ausgebildet sein, dass er im mit dem Verbraucher verbundenen Zustand aufladbar ist, beispielsweise über eine Ladebuchse am Akkupack oder am Rahmen des Elektrofahrrads. Der Akkupack weist ein Gehäuse auf, in welchem zumindest eine Akkuzelle angeordnet ist. Das Gehäuse des Akkupacks kann metallisch und/oder aus einem Kunststoff ausgebildet sein. Das Gehäuse des Ackupacks kann ein einziges oder mehrere Gehäuseteile aufweisen. All Gehäuseteile sind vorzugsweise als Außengehäuseteile ausgebildet, die zumindest teilweise den Ackupack nach außen abschließen. Die Verbindungsvorrichtung, insbesondere die Verriegelungseinheit oder die Dämpfungseinheit der Verriegelungsvorrichtung, kann teilweise einstückig oder einteilig mit dem Gehäuse des Akkupacks ausgebildet sein. Unter "einstückig" soll im Zusammenhang dieser Anmeldung verstanden werden, dass mehrere Elemente aus einem Stück gefertigt, und damit nicht in irgendeiner Weise kraft-, form- oder stoffschlüssig miteinander verbunden sind. Unter "einteilig" soll im Zusammenhang dieser Anmeldung insbesondere zwei Elemente verstanden werden, die stoffschlüssig miteinander verbunden sind. Das Gehäuse des Akkupacks kann ein einzelnes oder mehrere Gehäuseteile aufweisen. Die Akkuzelle kann beispielsweise als eine Li-Ion Akkuzelle ausgebildet sein. Insbesondere kann die Akkuzelle als eine zylindrische Rundzelle, eine prismatische Zelle oder als ein Pouch Zelle ausgebildet sein. Vorzugsweise ist im Gehäuse des Akkupacks ein Zellenhalter zur Aufnahme der Ackuzellen angeordnet. Der Zellenhalter ist teilweise oder vollständig innerhalb des Gehäuses des Akkupacks angeordnet. Das Gehäuse des Akkupacks kann einen oder mehrere Zellenhalter aufweisen. Der Zellenhalter kann Einzelzellenaufnahmen aufweisen, die zur Aufnahme einer einzelnen Akkuzelle ausgebildet sind. Der Zellenhalter ist bevorzugt einstückig und aus einem metallischen Material oder Kunststoff ausgebildet. Die Akkuzellen sind elektrisch miteinander verbunden beziehungsweise verschaltet. Zudem weist der Akkupack vorzugsweise eine Elektronik zur Steuerung des Akkupacks auf, wobei die die Elektronik teilweise oder vollständig im Gehäuse des Akkupacks angeordnet ist. Alternativ ist auch denkbar, dass die Elektronik teilweise oder vollständig außerhalb des Gehäuses des Akkupacks angeordnet ist. Die Elektronik des Akkupacks umfasst insbesondere eine Leiterplatte. Auf der Leiterplatte können elektronische Komponente, wie beispielsweise eine Recheneinheit, eine Speichereinheit, Sensorelemente, etc. angeordnet sein. Insbesondere umfasst die Elektronik ein Batteriemanagementsystem (BMS), das zur elektronischen Überwachung des Akkupacks ausgebildet ist. Zudem wird vorgeschlagen, dass der Akkupack eine elektrische Schnittstelle zur elektrischen Verbindung mit dem Verbraucher aufweist. Der Verbraucher weist eine korrespondierende elektrische Schnittstelle auf. Über die elektrische Verbindung kann der Akkupack beispielsweise geladen und/oder entladen werden. Alternativ oder zusätzlich ist auch denkbar, dass über die elektrische Schnittstelle Informationen von dem Akkupack an den Verbraucher und umgekehrt übermittelbar sind. Die elektrische Schnittstelle ist bevorzugt als eine Kontaktschnittstelle ausgebildet, bei der die elektrische Verbindung über einen physischen Kontakt zumindest zweier leitfähiger Bauteile erfolgt. Die elektrische Schnittstelle kann beispielsweise als ein Stecker oder als eine Buchse ausgebildet sein. Die elektrische Schnittstelle umfasst bevorzugt zumindest zwei elektrische Kontaktelemente. Insbesondere ist einer der elektrischen Kontaktelemente als ein Plus-Kontakt und das andere elektrische Kontaktelement als ein Minus-Kontakt ausgebildet. Zusätzlich kann die elektrische Schnittstelle zumindest einen Zusatzkontakt aufweisen, der dazu ausgebildet ist, zusätzliche Informationen an den Verbraucher und/oder an die Ladevorrichtung zu übertragen. Die Zusatzkontakte können als Signalkontakte, Codierkontakte, Temperaturkontakte, Bus-Kontakte etc. ausgebildet sein. Die elektrischen Kontaktelemente können beispielsweise als federnde Kontaktelemente in Form von Kontakttulpen oder als Flachkontakte in Form von Kontaktklingen ausgebildet sein.

Die Verriegelungseinheit ist insbesondere derart ausgebildet, dass der Akkupack im verriegelten Zustand im Wesentlichen unbeweglich am Verbraucher fixiert ist. Die Verriegelungseinheit ist zur Entriegelung betätigbar ausgebildet, wobei die Betätigung manuell, automatisch oder semi-automatisch erfolgen kann. Das insbesondere starre Verriegelungselement und das bewegliche Verriegelungselement sind vorzugsweise derart korrespondierend zueinander ausgebildet, dass das starre Verriegelungselement am beweglichen Verriegelungselement im verriegelten Zustand anliegt und/oder durch einen Eingriff oder Hinterschnitt des beweglichen Verriegelungselement am starren Verriegelungselement Formschluss entsteht. Das bewegliche Verriegelungselement kann am Verbraucher und das starre Verriegelungselement kann am Akkupack angeordnet sein. Alternativ ist ebenso denkbar, dass das bewegliche Verriegelungselement am Ackupack und das starre Verriegelungselement am Verbraucher angeordnet ist. Das bewegliche Verriegelungselement kann linear und/oder rotatorisch beweglich gelagert ausgebildet sein. Das starre und/oder das bewegliche Verriegelungselement können beispielsweise aus einem Kunststoff oder aus einem metallischen Werkstoff ausgebildet sein.

Die Dämpfungseinheit, insbesondere das erste Dämpfungselement und/oder das zweite Dämpfungselement, kann vollständig oder teilweise dem Akkupack und/oder dem Verbraucher zugeordnet sein. Das erste Dämpfungselement ist zur Dämpfung einer Krafteinwirkung auf die Verbindungsvorrichtung während des Verbindungsvorgangs zwischen dem Akkupack und dem Verbraucher vorgesehen. Das erste Dämpfungselement ist vorzugsweise aus einem elastischen und/oder plastischen Werkstoff, insbesondere einem Kunststoff und/oder einem Gummi, ausgebildet. Das erste Dämpfungselement kann einstückig, einteilig oder mehrteilig ausgebildet sein. Insbesondere ist das erste Dämpfungselement derart angeordnet, dass das erste Dämpfungselement in Verbindungsrichtung des Akkupacks mit dem Verbraucher gestaucht wird. Die Dämpfungseinheit kann ein einzelnes erstes Dämpfungselement oder mehrere erste Dämpfungselemente aufweisen. Es ist ebenso denkbar, dass sowohl der Verbraucher als auch der Akkupack zumindest ein erstes Dämpfungselement aufweist. Bevorzugt weist die Dämpfungseinheit je beweglichem Verriegelungselement oder je möglicher Verbauposition des beweglichen Verriegelungselements ein erstes Dämpfungselement auf. Die Verbindungsrichtung des Akkupacks kann im Wesentlichen linear und/oder rotatorisch ausgebildet sein. Die Verbindungsrichtung ist insbesondere einer Löserichtung, entlang der der Akkupack von dem Verbraucher lösbar ist, entgegengesetzt.

Das zweite Dämpfungselement ist zur Dämpfung einer Krafteinwirkung auf den Akkupack im verriegelten Zustand vorgesehen. Das erste Dämpfungselement und das zweite Dämpfungselement sind insbesondere beabstandet voneinander angeordnet. Es ist allerdings ebenso denkbar, dass das erste Dämpfungselement und das zweite Dämpfungselement aneinander anliegen oder einstückig miteinander ausgebildet sind. Das zweite Dämpfungselement ist vorzugsweise derart angeordnet, dass im verbundenen Zustand eine Krafteinwirkung in Längsrichtung des Akkupacks gedämpft wird. Insbesondere ist das zweite Dämpfungselement derart ausgebildet, dass eine elastische und/oder plastische Verformung des zweiten Dämpfungselements während der Benutzung des Verbrauchers erfolgt. Das zweite Dämpfungselement liegt im verriegelten Zustand sowohl am Akkupack als auch am Verbraucher an. Bevorzugt ist das zweite Dämpfungselement im verriegelten Zustand stets gestaucht. Die Dämpfungseinheit kann ein einzelnes zweites Dämpfungselement oder mehrere zweite Dämpfungselemente aufweisen. Es ist ebenso denkbar, dass sowohl der Verbraucher als auch der Akkupack zumindest ein zweites Dämpfungselement aufweisen. Das zweite Dämpfungselement ist vorzugsweise aus einem elastischen und/oder plastischen Werkstoff, insbesondere einem Kunststoff und/oder einem Gummi, ausgebildet. Vorzugsweise bestehen das erste Dämpfungselement und das zweite Dämpfungselement aus dem gleichen Werkstoff. Ebenso ist denkbar, dass das zweite Dämpfungselement derart elastisch ausgebildet ist, dass es ein höheres oder kleineres Elastizitätsmodul als das erste Dämpfungselement aufweist.

Des Weiteren ist denkbar, dass die Verbindungsvorrichtung zumindest zwei starre Verriegelungselemente und zumindest zwei erste Dämpfungselemente aufweist. Vorteilhaft kann dadurch die Verriegelung verstärkt werden. Die starren Verriegelungselemente können im Wesentlichen identisch oder unterschiedlich ausgebildet sein. Die zumindest zwei ersten Dämpfungselemente können im Wesentlichen identisch oder unterschiedlich ausgebildet sein.

Weiterhin wird vorgeschlagen, dass das zweite Dämpfungselement zwischen den zwei ersten Dämpfungselementen angeordnet ist. Vorteilhaft kann dadurch eine Verbindungsvorrichtung mit einem kompakten Aufbau realisiert werden. Das zumindest eine zweite Dämpfungselement und die ersten Dämpfungselemente können dabei in einer gemeinsamen Ebene oder zumindest teilweise, vorzugsweise vollständig, versetzt zueinander angeordnet sein. Bevorzugt sind die ersten Dämpfungselemente in einer ersten Ebene und das zweite Dämpfungselement in einer zweiten Ebene angeordnet, wobei die erste Ebene und die zweite Ebene parallel zueinander verlaufen und die zweite Ebene in Richtung des Akkupacks versetzt ausgebildet ist.

Weiterhin wird vorgeschlagen, dass die starren Verriegelungselemente über eine entgegen der Verbindungsrichtung gerichtete Brücke miteinander verbunden sind. Insbesondere weist die Brücke zwei Beine und einen Verbindungssteg auf, wobei die Beine als Zentrierungselement ausgebildet sind. Die starren Verriegelungselemente und die Brücke können einstückig oder einteilig miteinander ausgebildet sein. Der Verbindungssteg ist vorzugsweise im Wesentlichen parallel zu den starren Verriegelungselementen angeordnet. Die Beine können beispielsweise parallel zueinander oder aufeinander zulaufend ausgebildet sein. Die Zentrierungselemente sind zur Zentrierung des Akkupacks während des Verbindungsprozesses mit dem Verbraucher ausgebildet.

Zudem wird vorgeschlagen, dass der von der Brücke aufgespannte Bereich vorzugsweise vollständig von dem zweiten Dämpfungselement ausgefüllt ist. Vorteilhaft kann dadurch ein besonders wirksamer Verschleißschutz bereitgestellt werden.

Des Weiteren wird vorgeschlagen, dass sich das bewegliche Verriegelungselement in Verbindungsrichtung nach außen streckt und/oder wölbt und/oder bereichsweise zumindest teilweise eine konvexe Führungsfläche aufweist. Vorteilhaft kann dadurch der Verbindungsprozess optimiert werden. Alternativ oder zusätzlich ist ebenso denkbar, dass das bewegliche Verriegelungselement bereichsweise konvex und/oder eben ausgebildet ist. Das Verriegelungselement vorzugsweise und insbesondere durch die konvexe Führungsfläche derart ausgebildet, dass stets eine Verbindung mit dem Akkupack möglich ist, das Verriegelungselement durch den Akkupack in die Entriegelungsposition bewegbar ist.

Weiterhin wird vorgeschlagen, dass das bewegliche Verriegelungselement eine Aussparung zum Diebstahlschutz aufweist, die insbesondere in Verbindungsrichtung gerichtet ist. Vorteilhaft kann dadurch der Diebstahlschutz des verbundenen Akkupacks verbessert werden. Die Aussparung ist derart ausgebildet, dass das bewegliche Verriegelungselement im Bereich der Aussparung eine geringere Höhe entlang der Verbindungsrichtung aufweist als in einem Bereich der Führungsfläche, die beim Verbindungsprozess durch den Akkupack und/oder der Verbraucher mit einer Kraft beaufschlagt wird.

Zudem wird vorgeschlagen, dass die Aussparung in Verriegelungsrichtung vor der konvexe Führungsfläche angeordnet ist. Die Verriegelungsrichtung ist einer Entriegelungsrichtung entgegengesetzt ausgerichtet. Das bewegliche Verriegelungselement kann vorgespannt, beispielsweise mittels eines Federelements, ausgebildet sein. Die Verriegelungseinheit weist vorzugsweise eine Betätigungsvorrichtung auf, die zur Betätigung des beweglichen Verriegelungselements entgegen der Verriegelungsrichtung ausgebildet ist. Die Betätigungsvorrichtung kann manuell, also durch einen Benutzer beispielsweise per Hand betätigbar, und/oder semi-automatisch und/oder automatisch mittels einer elektrisch ansteuerbaren Aktuatorik ausgebildet sein. Vorzugsweise ist die Betätigungsvorrichtung als ein Schloss ausgebildet.

Des Weiteren wird vorgeschlagen, dass die Verbindungsvorrichtung einen Grundkörper aufweist, wobei der Grundkörper eine Labyrinthgeometrie aufweist, die sich entgegen der Verbindungsrichtung nach außen erstreckt. Vorteilhaft kann dadurch der Diebstahlschutz weiter verbessert werden. Die Labyrinthgeometrie ist insbesondere derart ausgebildet, dass ein Spalt zwischen dem Verbraucher und dem Akkupack im verbundenen Zustand vergrößert wird.

Weiterhin wird vorgeschlagen, dass das zweite Dämpfungselement zumindest eine Aufnahme für ein Zentrierungselement aufweist. Das Zentrierungselement ist dabei vorzugsweise als eines zu den Beinen korrespondierendes Zentrierungselement ausgebildet. Vorteilhaft kann dadurch der Verbindungsprozess weiter optimiert werden.

Alternativ betrifft die Erfindung insbesondere eine Verbindungsvorrichtung zur Verbindung eines Akkupacks an einem Verbraucher, mit einer Schwenkeinheit, die zur Führung des Akkupacks bei einem Verbindungsvorgang um eine Schwenkachse ausgebildet ist, und mit einer Zentriereinheit, die dazu ausgebildet ist, den Akkupack relativ zu dem Verbraucher zu zentrieren. Es wird vorgeschlagen, dass eine Länge der Schwenkeinheit entlang der Schwenkachse zumindest 50%, vorzugsweise zumindest 80%, einer Länge der Zentriereinheit entlang der Schwenkachse entspricht. Vorteilhaft kann dadurch eine besonders wirksame Zentrierung und Führung bereitgestellt werden. Die Schwenkeinheit kann ein einzelnes oder mehrere Schwenkelemente aufweisen. Die Länge der Schwenkeinheit entspricht dabei der Länge des einzelnen Schwenkelements oder dem maximalen Abstand der Schwenkelemente. Die Zentriereinheit kann ein einzelnes oder mehrere Zentrierelemente aufweisen. Die Länge der Zentriereinheit entspricht dabei der Länge des einzelnen Zentrierelements oder dem maximalen Abstand der Zentrierelemente.

Des Weiteren wird vorgeschlagen, dass die Schwenkeinheit und die Zentriereinheit mit Bezug auf die Schwenkachse teilweise oder vollständig überlappend ausgebildet sind. Vorteilhaft kann dadurch eine kompakte Verbindungsvorrichtung realisiert werden. Unter mit Bezug auf die Schwenkachse überlappend soll in diesem Zusammenhang insbesondere verstanden werden, dass je Zentrierelement zumindest eine Überlappungsachse vorhanden ist, die sowohl das Zentrierelement, die Schwenkachse und ein Schwenkelement schneidet.

Weiterhin wird vorgeschlagen, dass die Verbindungsvorrichtung eine elektrische Schnittstelle aufweist. Die elektrische Schnittstelle ist zur elektrischen Verbindung des Akkupacks mit dem Verbraucher vorgesehen. Die elektrische Schnittstelle weist dabei zueinander korrespondierende Komponenten auf, die im montierten Zustand am Verbraucher und am Akkupack angeordnet sind.

Zudem wird vorgeschlagen, dass die Schwenkeinheit einen größeren Abstand von der elektrischen Schnittstelle als die Zentriereinheit aufweist. Vorteilhaft kann dadurch der Verbindungsprozess optimiert werden.

Des Weiteren wird vorgeschlagen, dass die Zentriereinheit zumindest zwei Zentrierelemente aufweist, wobei die elektrische Schnittstelle zwischen den Zentrierelementen angeordnet ist. Vorteilhaft kann die elektrische Verbindung beim Verbindungsprozess durch die Zentrierung sichergestellt werden. Vorzugsweise ist die elektrische Schnittstelle mittig zwischen den Zentrierelementen angeordnet. Alternativ ist ebenso denkbar, dass die elektrische Schnittstelle außermittig zwischen den Zentrierelementen angeordnet ist.

Weiterhin wird vorgeschlagen, dass die Zentrierelemente als Aufnahmen ausgebildet sind, wobei die Aufnahmen von Seitenwänden umschlossen sind, wobei zumindest eine der Seitenwände verkürzt ausgebildet ist. Alternativ zu der verkürzten Seitenwand ist auch denkbar diese Seitenwand wegzulassen. Die Seitenwände können parallel zueinander ausgebildet sein. Alternativ ist auch denkbar, dass die Seitenwände zumindest bereichsweise konisch ausgebildet sind. Insbesondere weisen die Seitenwände im Bereich der Öffnung einen größeren Abstand zueinander als innerhalb der Aufnahme auf. Die Aufnahme kann beispielsweise einen runden, eckigen, ovalen, etc. Querschnitt aufweisen.

Zudem wird vorgeschlagen, dass die Verbindungsvorrichtung zu den als Aufnahmen ausgebildeten Zentrierelementen korrespondierende Zentrierelemente aufweist, die beispielsweise als Bolzen ausgebildet sein können. Die Bolzen können dementsprechend im Querschnitt betrachtet im Wesentlichen rund, rechteckig, oval, mit scharfen oder weichen Kanten, etc. ausgebildet sein. Der Bolzen kann einen im Wesentlichen konstanten Querschnitt aufweisen. Alternativ ist auch denkbar, dass sich der Querschnitt in Richtung der Stirnseite verringert. Insbesondere weisen die Bolzen an ihren Stirnseiten zumindest ein Führungselement, vorzugsweise drei Führungselemente, auf, wobei das zumindest eine Führungselement bevorzugt als eine Schräge ausgebildet ist. Vorteilhaft kann dadurch die Zentrierung weiter verbessert und ein Verklemmen verhindert werden.

Des Weiteren wird vorgeschlagen, dass die Steckereinheit ein Stecker und eine Buchse aufweist, wobei die Zentriereinheit derart ausgebildet ist, dass ein Hohlraum zwischen dem Stecker und der Buchse angeordnet ist. Der Hohlraum ist insbesondere derart ausgebildet, dass zwischen dem Stecker und der Buchse ein Abstand zwischen 1 mm und 5 mm, vorzugsweise zwischen 2 mm und 4 mm, ausgebildet ist.

Zudem betrifft die Erfindung einen Akkupack mit einer Verbindungsvorrichtung wie zuvor beschrieben.

Des Weiteren betrifft die Erfindung ein Elektrofahrrad mit einer Verbindungsvorrichtung wie zuvor beschrieben.

Weiterhin betrifft die Erfindung ein System mit einem Elektrofahrrad, einem Akkupack und einer Verbindungsvorrichtung zur Verbindung des Akkupacks mit dem Elektrofahrrad wie zuvor beschrieben.

Alternativ betrifft die Erfindung insbesondere eine Verbindungsvorrichtung zur Verbindung eines Akkupacks mit einem Verbraucher, wobei der Akkupack einen Griff und einen Grundkörper aufweist, wobei zwischen dem Griff und dem Grundkörper eine Griffraum ausgebildet ist. Es wird vorgeschlagen, dass die Verbindungsvorrichtung wahlweise ein erstes Verbindungsvorrichtungsgehäuseteil oder ein zweites Verbindungsvorrichtungsgehäuseteil aufweist, wobei im verbundenen Zustand das erste Verbindungsvorrichtungsgehäuseteil oder das zweite Verbindungsvorrichtungsgehäuseteil teilweise oder vollständig im Griffraum angeordnet sind, wobei das zweite Verbindungsvorrichtungsgehäuseteil derart ausgebildet ist, dass das zweite Verbindungsvorrichtungsgehäuseteil einen größeren Bereich im Griffraum als das erste Verbindungsvorrichtungsgehäuseteil einnimmt. Vorteilhaft kann durch den modularen Aufbau die Verbindungsvorrichtung optimal an den Verbraucher angepasst werden.

Der Griff des Akkupacks ist dem Gehäuse des Akkupacks zugeordnet. Der Griff des Akkupacks ist insbesondere einteilig oder einstückig mit einem Gehäuseteil des Gehäuses des Akkupacks ausgebildet. Der Griff ist bevorzugt derart ausgebildet, dass er vollständig von dem Benutzer zum Tragen und/oder zum Lösen des Akkupacks von dem Verbraucher umgriffen werden kann.

Der Grundkörper des Akkupacks umfasst zumindest ein Gehäuseteil des Akkupacks, in welchem zumindest eine Akkuzelle des Akkupacks angeordnet ist. Vorzugsweise umfasst der Grundkörper des Akkupacks das Gehäuseteil oder die Gehäuseteil, in welchem die Akkuzellen und die Elektronik des Akkupacks angeordnet sind.

Der Griffraum ist hohl ausgebildet. Der Griffraum weist insbesondere eine erste Öffnung und eine zweite Öffnung auf, die von dem Griff und von dem Gehäuse des Akkupacks aufgespannt werden. Die erste Öffnung und die zweite Öffnung sind vorzugsweise auf gegenüberliegenden Seiten des Griffraums angeordnet. Alternativ ist auch denkbar, dass die Öffnungen auf benachbarten Seiten angeordnet sind.

Das erste Verbindungsvorrichtungsgehäuseteil und das zweite Verbindungsvorrichtungsgehäuseteil sind insbesondere zur Montage am Verbraucher vorgesehen, wobei die Montage direkt am Verbraucher, beispielsweise an einem Rahmen eines Elektrofahrrads, oder indirekt über eine weitere Komponente der Verbindungsvorrichtung erfolgt. Die Verbindung erfolgt jeweils vorzugsweise zerstörungsfrei lösbar.

Insbesondere entspricht der größere Bereich zumindest 10%, vorzugsweise zumindest 25%, bevorzugt zumindest 50%, eines Volumens des Griffraums. Alternativ oder zusätzlich entspricht der größere Bereich zumindest 10%, vorzugsweise zumindest 20%, bevorzugt zumindest 40%, einer Höhe des Griffraums oder des Akkupacks.

Des Weiteren wird vorgeschlagen, dass das erste Verbindungsvorrichtungsgehäuseteil und das zweite Verbindungsvorrichtungsgehäuseteil eine Verriegelungseinheit umschließen und/oder eine Funktionseinheit umschließen und/oder aufweisen. Die Funktionseinheit kann beispielsweise als eine elektrische Schnittstelle, eine Zentriereinheit, eine Führungseinheit und/oder eine Diebstahlschutzeinheit umfassen.

Weiterhin wird vorgeschlagen, dass die Verbindungsvorrichtung ein Gehäuseverbindungselement aufweist, das zur Anbindung des ersten Verbindungsvorrichtungsgehäuseteils und des zweiten Verbindungsvorrichtungsgehäuseteils ausgebildet ist. Vorteilhaft kann dadurch mittels des gleichen Gehäuseverbindungselements wahlweise das erste oder das zweite Verbindungsvorrichtungsgehäuseteil montiert werden. Die Verbindungsvorrichtung kann ein oder mehrere Gehäuseverbindungselemente aufweisen. Das Gehäuseverbindungselement kann als ein Führungselement, beispielsweise in Form einer Führungsnut, als ein Kraftschlusselement und/oder als ein Formschlusselement ausgebildet sein. Insbesondere kann das Gehäuseverbindungselement als ein Gewinde zur Ausbildung einer Schraubverbindung oder als ein Rastmittel zur Ausbildung einer Rastverbindung ausgebildet sein

Zudem wird vorgeschlagen, dass das zweite Verbindungsvorrichtungsgehäuseteil derart ausgebildet ist, dass der Griffraum des Akkupacks größtenteils oder vollständig ausgefüllt ist. Unter größtenteils soll in diesem Zusammenhang insbesondere auch eine Ausfüllung verstanden werden, die sich im Wesentlichen funktions- und/oder fertigungsbedingt von einer vollständigen Ausfüllung unterscheidet.

Des Weiteren wird vorgeschlagen, dass das zweite Verbindungsvorrichtungsgehäuseteil derart in den Griffraum hineinragt, dass eine Außenkontur des Gehäuses des Akkupacks durch das Verbindungsvorrichtungsgehäuseteil weitergeführt wird. Vorteilhaft kann dadurch die Ergonomie des Systems verbessert werden.

Weiterhin wird vorgeschlagen, dass das erste Verbindungsvorrichtungsgehäuseteil und das zweite Verbindungsvorrichtungsgehäuseteil jeweils zumindest ein Diebstahlschutzelement aufweisen, das identisch ausgebildet ist. Alternativ oder zusätzlich können die jeweiligen Diebstahlschutzelemente auch unterschiedlich und auf die Größe der jeweiligen Verbindungsvorrichtungsgehäuseteile angepasst ausgebildet sein. Das Diebstahlschutzelement ist vorzugsweise einteilig oder einstückig mit dem ersten oder zweiten Verbindungsvorrichtungsgehäuseteil ausgebildet.

Zudem wird vorgeschlagen, dass das erste Verbindungsvorrichtungsgehäuseteil bezogen auf das zweite Verbindungsvorrichtungsgehäuseteil gekürzt ausgebildet ist. Unter gekürzt soll in diesem Zusammenhang insbesondere verstanden werden, dass das zweite Verbindungsvorrichtungsgehäuseteil im Wesentlichen die vollständige Außenkontur des ersten Verbindungsvorrichtungsgehäuseteils umfasst.

Zudem betrifft die Erfindung alternativ insbesondere ein Elektrofahrrad mit einem Akkupack und einer Verbindungsvorrichtung wie zuvor beschrieben. Das Elektrofahrrad weist vorzugsweise einen Rahmen auf, wobei der Akkupack zwischen einem Unterrohr und einem Oberrohr des Rahmens derart befestigt ist, dass nur eine seitliche Entnahme möglich ist. Unter einer seitlichen Entnahme soll dabei insbesondere eine Entnahme im Wesentlichen entlang einer Radachse verstanden werden.

Des Weiteren wird vorgeschlagen, dass die Verbindungsvorrichtung das erste Verbindungsvorrichtungsgehäuseteil aufweist, wobei das erste Verbindungsvorrichtungsgehäuseteil bezogen auf das zweite Verbindungsvorrichtungsgehäuseteil eine Höhendifferenz aufweist, die größer als ein maximaler Abstand zwischen dem Akkupack und dem Oberrohr bei der seitlichen Entnahme ausgebildet ist.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine Seitenansicht eines Elektrofahrrads mit einem Akkupack verbunden über eine Verbindungsvorrichtung;
Fig. 2 eine Draufsicht des Akkupacks;
Fig. 3a eine Seitenansicht des Akkupacks und des Verbindungsvorrichtung während des Verbindungsprozesses;
Fig. 3b eine Seitenansicht des Akkupacks und des Verbindungsvorrichtung nach dem Verbindungsprozess;
Fig. 3c eine Seitenansicht einer ersten Baugruppe der Verbindungsvorrichtung mit einem zweiten Verbindungsvorrichtungsgehäuseteil;
Fig. 4a eine Teilschnitt durch den Akkupack;
Fig. 4b ein Teilschnitt durch den Akkupack im mit der ersten Baugruppe und einem ersten Verbindungsvorrichtungsgehäuseteil verbundenen Zustand;
Fig. 4c ein Teilschnitt durch den Akkupack im mit der ersten Baugruppe und dem zweiten Verbindungsvorrichtungsgehäuseteil verbundenen Zustand;
Fig. 5a eine Vorderansicht einer zweiten Baugruppe der Verbindungsvorrichtung;
Fig. 5b eine perspektivische Ansicht der zweiten Baugruppe;
Fig. 6a eine Hinteransicht des Akkupacks;
Fig. 6b ein Teilschnitt durch den Akkupack entlang einer Ebene A;
Fig. 7 ein Teilschnitt durch den Akkupack und die zweite Baugruppe der Verbindungsvorrichtung im verbundenen Zustand;
Fig. 8a eine Vorderansicht der ersten Baugruppe mit dem ersten Verbindungsgehäuseteil;
Fig. 8b eine Vorderansicht der ersten Baugruppe mit dem zweiten Verbindungsgehäuseteil;
Fig. 9 eine Vorderansicht des Akkupacks im Schnitt;
Fig. 10 ein Schnitt durch ein zweites Dämpfungselement der Verbindungsvorrichtung im verbundenen Zustand mit dem Akkupack;
Fig. 11 ein Schnitt durch ein bewegliches Verriegelungselement der Verbindungsvorrichtung im verbundenen Zustand mit dem Akkupack.

### Beschreibung der Ausführungsbeispiele

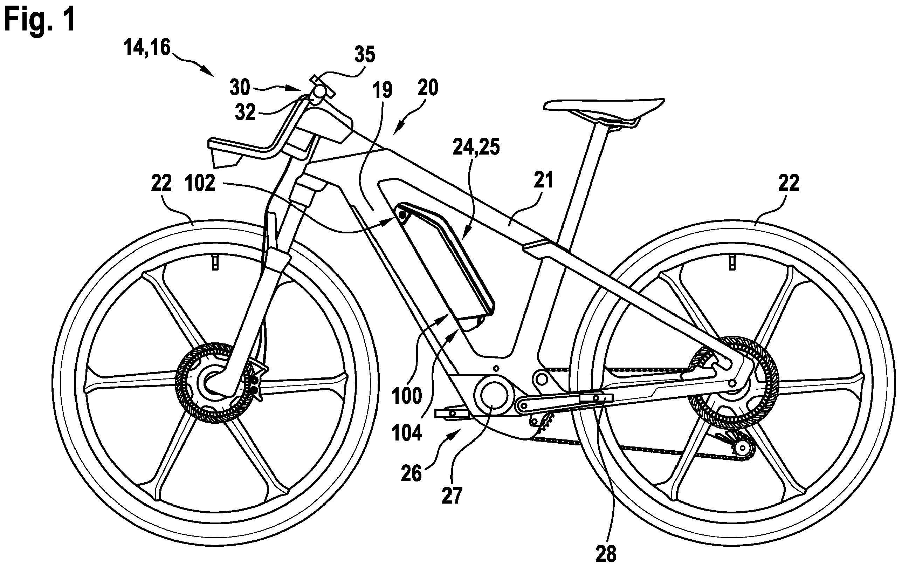

In Fig. 1 ist eine Seitenansicht eines Verbrauchers 14 in Form eines Elektrofahrrads 16 mit einer Verbindungsvorrichtung 100 gezeigt. Das Elektrofahrrad 16 kann beispielsweise als ein Pedelec oder als ein E-Bike ausgebildet sein.

Das Elektrofahrrad 16 weist ein Gehäuse in Form eines Rahmens 20 bzw. eines Fahrradrahmens auf. Mit dem Rahmen 20 sind zwei Räder 22 verbunden. Zudem weist das Elektrofahrrad 16 einen Energiespeicher 24 in Form eines Akkupacks 25 auf. Zudem weist das Elektrofahrrad 16 eine Antriebseinheit 26 auf, die einen Elektromotor beziehungsweise einen Hilfsmotor umfasst. Der Elektromotor ist vorzugsweise als ein Permanentmagnet-erregter, bürstenloser Gleichstrommotor ausgebildet. Der Elektromotor ist beispielhaft als ein Mittelmotor ausgebildet, wobei auch ein Nabenmotor oder dergleichen denkbar ist. Das Elektrofahrrad 16, insbesondere die Antriebseinheit 26 des Elektrofahrrads 16, wird über den Energiespeicher 24 mit Energie versorgt. Der Akkupack 25 ist mittels der Verbindungsvorrichtung 100 mit dem Elektrofahrrad 16, insbesondere mit dem Rahmen 20 des Elektrofahrrads 16, verbunden. Die Verbindung erfolgt mittels einer Bewegung des Akkupacks 25 entlang einer Verbindungsrichtung 114 relativ zum Elektrofahrrad 16.

Die Antriebseinheit 26 umfasst eine Steuereinheit (nicht dargestellt), die zur Steuerung oder Regelung des Elektrofahrrads 16, insbesondere des Elektromotors, ausgebildet ist. Das Elektrofahrrad 16 weist eine Tretkurbel 28 auf. Die Tretkurbel 28 weist eine Tretkurbelwelle (nicht dargestellt) auf. Die Steuereinheit des Elektrofahrrads 16 ist mit einer Sensoreinheit (nicht dargestellt) verbunden. Die Sensoreinheit des Elektrofahrrads 16 umfasst beispielhaft mehrere Sensorelemente, wie einen Drehmomentsensor, einen Bewegungssensor, beispielsweise in Form eines Beschleunigungssensors, und einen Magnetsensor.

Die Steuereinheit und die Antriebseinheit 26 mit dem Elektromotor und der Tretkurbelwelle sind in einem mit dem Rahmen 20 verbundenen Antriebsgehäuse 27 angeordnet. Die Antriebsbewegung des Elektromotors wird vorzugsweise über ein Getriebe (nicht dargestellt) auf die Tretkurbelwelle übertragen, wobei die Größe der Unterstützung durch die Antriebseinheit 26 mittels der Steuereinheit gesteuert oder geregelt wird. Die Steuereinheit ist dazu ausgebildet, die Antriebseinheit 26 derart anzusteuern, dass der Fahrer des Elektrofahrrads 16 beim Pedalieren unterstützt wird. Vorzugsweise ist die Steuereinheit durch den Fahrer bedienbar ausgebildet, sodass der Fahrer den Unterstützungsgrad einstellen kann.

Die Steuereinheit und die Sensoreinheit sind einer Elektronik (nicht dargestellt) des Elektrofahrrads 16 zugeordnet. Die Elektronik umfasst beispielhaft eine Leiterplatte, auf der eine Recheneinheit in Form einer CPU, eine Speichereinheit und die Sensoreinheit angeordnet ist. Die Elektronik ist beispielhaft vollständig in dem Antriebsgehäuse 27 der Antriebseinheit 26 angeordnet. Es ist allerdings auch denkbar, dass die Elektronik nur teilweise im Antriebsgehäuse 27 angeordnet ist und Komponente der Elektronik an anderen Bereichen des Elektrofahrrads 16 angeordnet sind. Zudem ist auch eine Anordnung der Elektronik außerhalb des Antriebsgehäuses 27 denkbar.

Das Elektrofahrrad 16 umfasst zudem beispielhaft einen Boardcomputer 30, der an einem Lenker 32 des Elektrofahrrads 16 angeordnet ist. Der Boardcomputer 30 ist beispielhaft teilweise lösbar mit dem Elektrofahrrad 16 ausgebildet. Der Boardcomputer 30 umfasst eine Anzeigeeinheit (nicht dargestellt), die zur Anzeige von Informationen ausgebildet ist. Der Boardcomputer 30 umfasst zudem ein Bedienelement (nicht dargestellt), über das der Benutzer beziehungsweise der Fahrer den Boardcomputer 30 und/oder das Elektrofahrrad 16 steuern kann. Das Bedienelement ist beispielhaft als ein berührungsempfindlicher Bildschirm ausgebildet. Der Boardcomputer 30 ist mit der Steuereinheit des Elektrofahrrads 16 derart verbunden, dass Informationen ausgetauscht werden können. Beispielsweise ist über die Anzeigeeinheit eine von der Steuereinheit ermittelte Geschwindigkeit, ein eingestellter Unterstützungsgrad des Elektromotors, eine Routeninformation einer Navigationseinheit und ein Ladezustand des Akkupacks 25 anzeigbar.

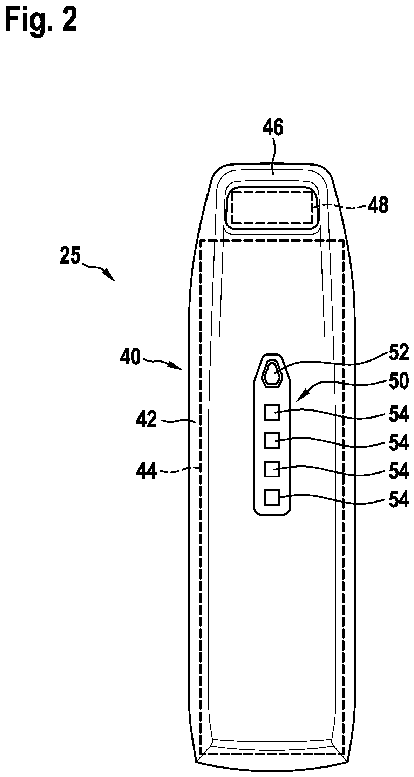

In Figur 2 ist der Akkupack 25 in einer Draufsicht gezeigt. Der Akkupacks 25 weist ein Gehäuse 40 auf, das beispielhaft aus mehreren Gehäuseteilen 42 ausgebildet ist.

Der Akkupack 25 umfasst beispielhaft 20 Akkuzellen (nicht dargestellt), die in dem Gehäuse 40 aufgenommen sind. Die Akkuzellen sind beispielhaft als zylindrische Rundzellen, insbesondere als Li-lon Rundzellen, ausgebildet. Das Gehäuse 40 weist einen Grundkörper 44 und einen Griff 46 auf. Im Grundkörper 44 des Akkupacks 25 sind die Akkuzellen und eine Elektronik (nicht dargestellt) angeordnet. Die Elektronik umfasst eine Leiterplatte (nicht dargestellt), wobei auf der Leiterplatte elektronische Komponente, wie beispielsweise eine Recheneinheit und eine Speichereinheit, angeordnet sind. Die Elektronik umfasst zudem ein Batteriemanagementsystem, das zur Überwachung des Akkupacks 25 ausgebildet ist. Des Weiteren ist die Elektronik des Akkupacks 25 zur Steuerung einer Ladezustandsanzeige 50 zur Anzeige eines Ladezustands des Akkupacks 25 ausgebildet. Die Ladezustandsanzeige 50 weist eine Bedienelement 52 zur Aktivierung des Ladezustandsanzeige 50 und mehrere Leuchtelemente 54 zur Anzeige auf.

Zwischen dem Griff 46 und dem Grundkörper 44 ist ein Griffraum 48 in Form eines Hohlraums angeordnet. Der Hohlraum ist derart ausgebildet, dass bei der Nutzung des Griffs 46, beispielsweise zum Tragen des Akkupacks 25, in diesem eine Hand des Benutzers eingreifen kann.

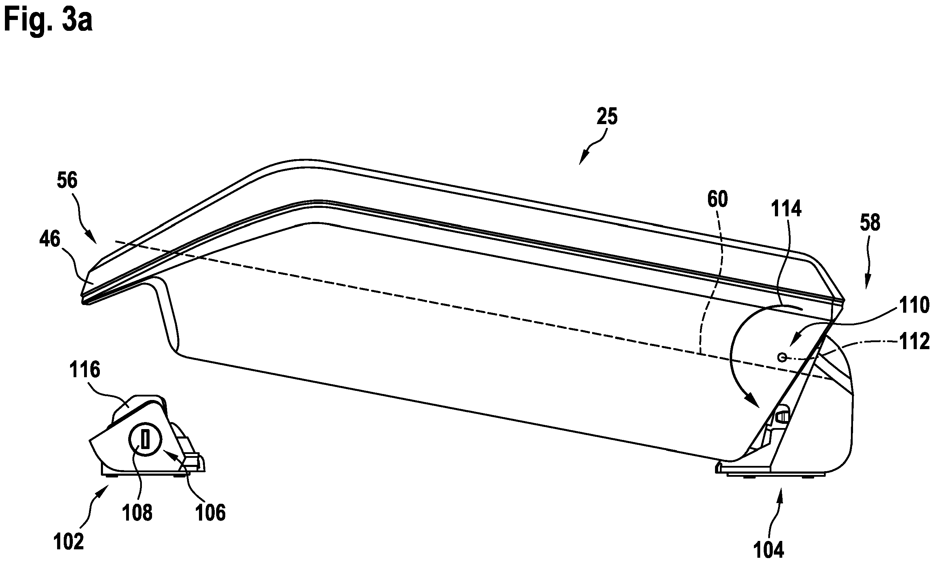

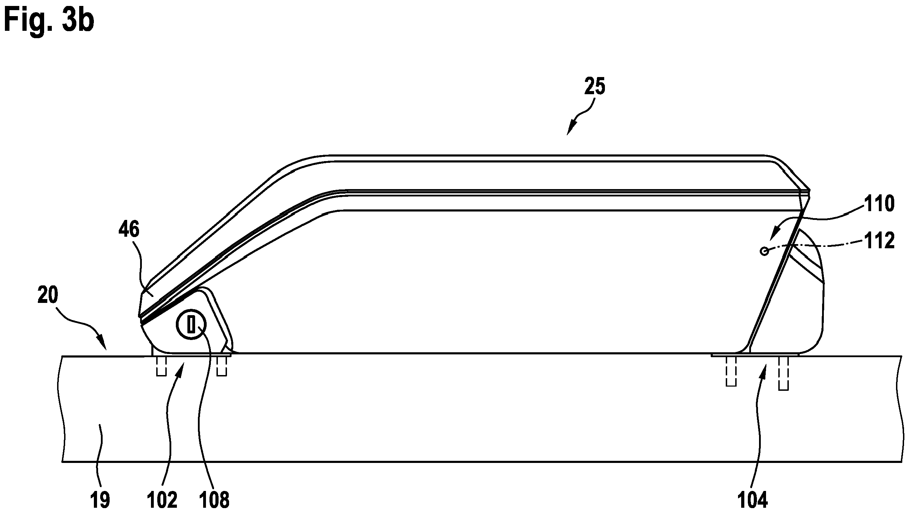

In Figur 3a ist eine Seitenansicht des Akkupacks 25 und der Verbindungsvorrichtung 100 zu Beginn des Verbindungsprozesses gezeigt. In Figur 3b ist eine Seitenansicht des Akkupacks 25 im mit dem Rahmen 20 des Elektrofahrrads 16 verbundenen Zustand gezeigt.

Die Verbindungsvorrichtung 100 weist eine erste Baugruppe 102 und eine zweite Baugruppe 104 auf, die beispielhaft getrennt voneinander mit dem Verbraucher 14, insbesondere mit dem Rahmen 20 des Elektrofahrrads 16, verbindbar sind. Alternativ ist auch denkbar, dass die beiden Baugruppen 102, 104 miteinander verbunden sind und gemeinsam am Verbraucher 14 befestigbar sind. Die Befestigung erfolgt beispielhaft über eine Schraubverbindung. Es sind allerdings auch andere Befestigungsarten denkbar.

Die erste Baugruppe 102 umfasst eine Verriegelungseinheit 106 zu Verriegelung des Akkupacks 25 am Elektrofahrrad 16. Die Verriegelungseinheit 106 umfasst ein Schloss 108, das beispielhaft mittels eines Schlüssels (nicht dargestellt) manuell betätigbar zur Entriegelung des Akkupacks 25 ausgebildet ist.

Die zweite Baugruppe 104 umfasst eine Schwenkeinheit 110. Die Schwenkeinheit 110 ist derart ausgebildet, dass der Akkupack 25 mittels einer Schwenkbewegung um eine Schwenkachse 112 mit dem Elektrofahrrad 16 verbindbar ist. Der Akkupack 25 weist ein vorderes Ende 56, an welchem der Griff 46 angeordnet ist, und ein hinteres Ende 58, das auf einer dem vorderen Ende 56 gegenüberliegenden Seite angeordnet ist, auf. Der Akkupack 25 erstreckt sich entlang seiner Längserstreckung 60 zwischen dem vorderen Ende 56 und dem hinteren Ende 58. Die Schwenkachse 112 ist beispielhaft senkrecht zu der Längserstreckung 60 des Akkupacks 25 ausgebildet.

Zur Verbindung mit dem Elektrofahrrad 16 wird der Akkupack 25 in die zweite Baugruppe 104 eingesetzt und um die Schwenkachse 112 entlang einer Verbindungsrichtung 114 in die erste Baugruppe 102 eingeschwenkt bis der Akkupack 25 in die Verriegelungseinheit 106 einrastet. Die Verbindungsrichtung 114 ist beispielhaft rotatorisch ausgebildet, wobei alternativ oder auch zusätzliche eine translatorische Verbindungsrichtung denkbar ist.

Der Akkupack 25 ist im mit dem Elektrofahrrad 16 verbundenen Zustand über die Verbindungsvorrichtung 100 beispielhaft zwischen einem Unterrohr 19 und einem Oberrohr 21 des Rahmens 20 befestigt (siehe Figur 1). Entlang beziehungsweise entgegen der Verbindungsrichtung 114 ist somit der Bewegungsradius des Akkupacks 25 stark eingeschränkt. Somit muss der Akkupack 25 zur Verbindung mit dem Elektrofahrrad 16 zunächst seitlich in den Raum zwischen dem Unterrohr 19 und dem Oberrohr 21 des Rahmens 20 eingeschoben werden, um im Anschluss den Akkupack 25 in Verbindungsrichtung 114 einzuschwenken. Durch die beispielhaft beschriebene Rahmengeometrie des Rahmens 20 ist somit ein maximaler Bewegungsradius, um den der Akkupack 25 entlang der Verbindungsrichtung 114 schwenkbar ist eingeschränkt.

Die Verbindungsvorrichtung 100 weist ein erstes Verbindungsvorrichtungsgehäuseteil 116 und ein zweites Verbindungsvorrichtungsgehäuseteil 118 auf, die wahlweise, aber nicht gleichzeitig, an der ersten Baugruppe 102 montierbar sind, um die Verbindungsvorrichtung 100 auf eine Geometrie des Verbrauchers 14 optimal anzupassen. In der Ausführungsform gemäß Figur 2a weist die Verbindungsvorrichtung 100 das erste Verbindungsvorrichtungsgehäuseteil 116 auf.

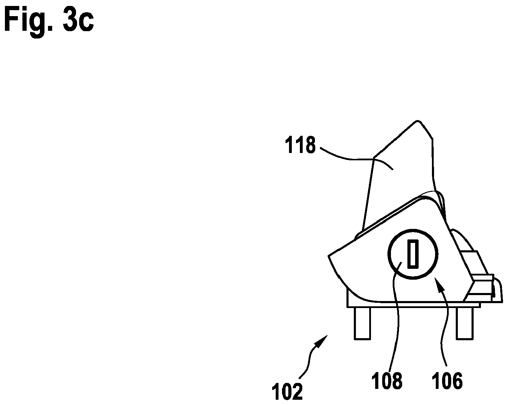

In Figur 3c ist eine Seitenansicht der ersten Baugruppe 102 der Verbindungsvorrichtung 100 mit dem zweiten Verbindungsvorrichtungsgehäuseteil 118 gezeigt.

Das erste Verbindungsvorrichtungsgehäuseteil 116 und das zweite Verbindungsvorrichtungsgehäuseteil 118 unterscheiden sich dabei insbesondere in ihrer Größe. Insbesondere ist das zweite Verbindungsvorrichtungsgehäuseteil 118 derart ausgebildet, dass das zweite Verbindungsvorrichtungsgehäuseteil 118 im Griffraum 48 einen größeren Bereich als das erste Verbindungsvorrichtungsgehäuseteil 116 einnimmt.

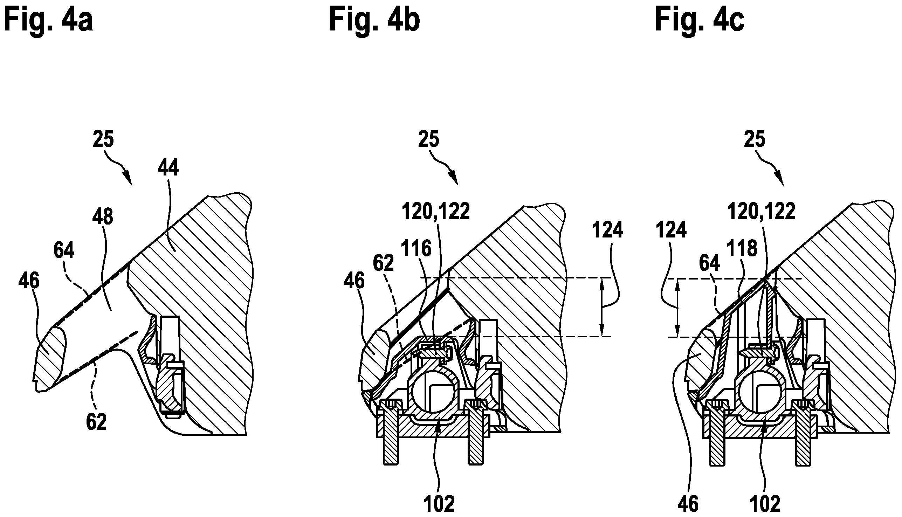

In Figur 4a ist der Akkupack 25 in einem Teillängsschnitt gezeigt. Der Griffraum 48 zwischen dem Griff 46 und dem Grundkörper 44 des Akkupacks 25 entspricht dabei beispielhaft dem zwischen dem Griff 46 und dem Grundkörper 44 offenen Raum zum Umgreifen des Griffs 44. Der Griffraum 48 ist insbesondere seitlich vollständig von dem Gehäuse 40 des Akkupacks 25 umschlossen. Der Griffraum 48 weist zudem zwei gegenüberliegende Öffnungen 62, 64 auf. Die erste Öffnung 62 ist dabei der ersten Baugruppe 102 der Verbindungsvorrichtung 100 zugewandt angeordnet. Die zweite Öffnung 64 unterbricht die Außenkontur des Ackupacks 25.

In Figur 4b ist der Akkupack 25 im mit der ersten Baugruppe 102 verbundenen Zustand in einem Längsschnitt gezeigt, wobei die erste Baugruppe 102 das erste Verbindungsvorrichtungsgehäuseteil 116 aufweist. Das erste Verbindungsvorrichtungsgehäuseteil 116 ist mittels eines Verbindungselements 120, beispielhaft in Form einer Schraube 122, mit der ersten Baugruppe 102, insbesondere mit der Verriegelungseinheit 106, lösbar verbunden. Aufgrund der geringen Höhe wird der Griffraum 48 im verbundenen Zustand nur in einem sehr kleinen Bereich ausgefüllt, der unter 25% der Größe des Griffraums 48 entspricht. Das erste Verbindungsvorrichtungsgehäuseteil 116 schneidet dabei die erste Öffnung 62 des Griffraums 48 und ist beabstandet zu der zweiten Öffnung 64 des Griffraums 48 angeordnet. Durch die im Vergleich zu dem zweiten Verbindungsvorrichtungsgehäuseteil 118 geringe Bauhöhe des ersten Verbindungsvorrichtungsgehäuseteils 116 kann die Verbindung zwischen dem Akkupack 25 und dem Elektrofahrrad 16 mittels einer im Wesentlichen minimalen Schwenkbewegung entgegen der Verbindungsrichtung 114 und anschließendem seitlichen Entnehmen erfolgen.

In Figur 4c ist der Akkupack 25 im mit der ersten Baugruppe 102 verbundenen Zustand in einem Längsschnitt gezeigt, wobei die erste Baugruppe 102 das zweite Verbindungsvorrichtungsgehäuseteil 118 aufweist. Das zweite Verbindungsvorrichtungsgehäuseteil 118 ist mittels des gleichen Verbindungselements 120 wie das erste Verbindungsvorrichtungsgehäuseteil 116, mit der ersten Baugruppe 102, insbesondere mit der Verriegelungseinheit 106, lösbar verbunden. Somit kann durch ein Lösen der Schraube die Verbindungsvorrichtungsgehäuseteile 116, 118 ausgetauscht werden. Das zweite Verbindungsvorrichtungsgehäuseteil 118 ist derart ausgebildet, dass es den Griffraum 48 größtenteils bis auf herstellungsbedingte und funktionsbedingte Hohlräume und Spalte ausfüllt. Insbesondere schneidet das zweite Verbindungsvorrichtungsgehäuseteil 118 die erste Öffnung 62 des Griffraums 48 und ragt bis zur zweiten Öffnung 64 des Griffraums 48 derart nach oben, dass im verbundenen Zustand die Außenkontur des Akkupacks 25 durch die Baugruppe 102, insbesondere durch das zweite Verbindungsvorrichtungsgehäuseteil 118, weitergeführt wird. Vorteilhaft kann dadurch der Zugang zu der Verriegelungseinheit 106 über den Griffraum 48 erschwert werden, was den Diebstahlschutz erhöht. Zudem wird die Aerodynamik des Gesamtsystems verbessert.

Das erste Verbindungsvorrichtungsgehäuseteil 116 und das zweite Verbindungsvorrichtungsgehäuseteil 118 weisen eine Höhendifferenz 124 insbesondere entlang der Verbindungsrichtung 114 auf. Durch diese Höhendifferenz 124 unterscheiden sich die Strecken, die der Akkupack 25 zur Entnahme entgegen der Verbindungsrichtung 114 bewegt werden muss. Das erste Verbindungsvorrichtungsgehäuseteil 116 ist vorzugsweise derart ausgebildet, dass eine um zumindest 5° geringere Rotation entgegen der Verbindungsrichtung 114 zur seitlichen Entnahme benötigt wird. Im Ausführungsbeispiel gemäß Fig. 1 ist die Höhendifferenz 124 derart groß, dass ein Lösen der Verbindung nur mit einer Baugruppe 102 mit dem ersten Verbindungsvorrichtungsgehäuseteil 116 möglich ist.

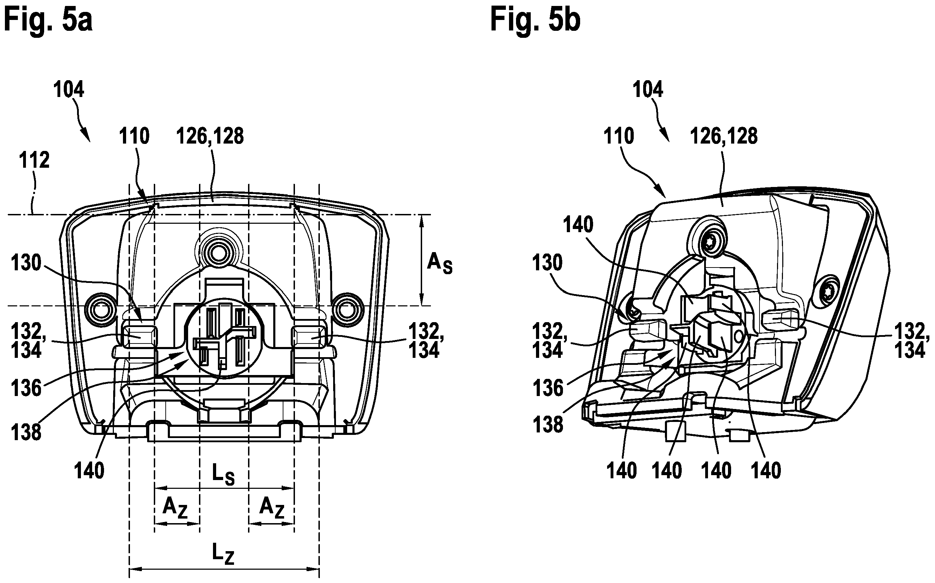

In Figur 5a ist die zweite Baugruppe 104 in einer Vorderansicht und in Figur 5b in einer perspektivischen Ansicht gezeigt. Die Schwenkeinheit 110 weist ein Schwenkelement 126 auf, um das der Akkupack 25 im Verbindungsprozess geschwenkt wird. Das erste Schwenkelement 126 erstreckt sich somit geradlinig entlang der Schwenkachse 112 der Schwenkeinheit 110. Das Schwenkelement 126 ist beispielhaft als eine rundliche Kante 128 im Gehäuse der zweiten Baugruppe 104 ausgebildet. Alternativ sind auch andere Positionen und Geometrien des Schwenkelements 126 oder mehrere Schwenkelemente denkbar.

Zudem umfasst die Verbindungsvorrichtung 100 eine Zentriereinheit 130, die dazu ausgebildet ist, den Akkupack 25 beim Verbindungsprozess relativ zum Verbraucher 14 zu zentrieren. Die Zentriereinheit 130 umfasst an der zweiten Baugruppe 104 beispielhaft zwei Zentrierelemente 132. Die Zentrierelemente 132 sind beispielhaft identisch ausgebildet. Die Zentrierelemente 132 sind insbesondere als Bolzen 134 ausgebildet, die sich nach außen erstrecken.

Um eine optimale Zentrierung zu gewährleisten, weist die Schwenkeinheit 110 entlang der Schwenkachse 112 eine Länge Ls auf, die beispielhaft ca. 85% einer Länge L_{Z} der Zentriereinheit 130 entspricht. Die Länge L_{Z} der Zentriereinheit 130 entspricht dabei einem maximalen Abstand der beiden Zentrierelemente 132 voneinander insbesondere entlang der Schwenkachse 112. Das Schwenkelement 126 ist beispielhaft insbesondere derart angeordnet, dass das Schwenkelement 126 mit den Zentrierelementen 132 überlappt. Betrachtet entlang der Schwenkachse 112 überlappt das Schwenkelement 126 an seinen Enden mit den Zentrierelementen 132.

Zudem weist die Verbindungsvorrichtung 100 eine elektrische Schnittstelle 136 zur elektrischen Verbindung des Akkupacks 25 mit dem Elektrofahrrad 16 auf. Die zweite Baugruppe 104 weist beispielhaft einen Stecker 138 auf, der der elektrischen Schnittstelle 136 zugeordnet ist. Der Stecker 138 weist beispielhaft fünf Kontaktelemente 140 auf, die beispielhaft als Kontaktklingen ausgebildet sind. Die Kontaktelemente 140 sind zur Leistungsversorgung und/oder zum Austausch von Informationen beziehungsweise Datenübertragung ausgebildet. Die elektrische Schnittstelle 136, insbesondere der Stecker 138 der zweiten Baugruppe 104, ist beispielhaft mittig zwischen den Zentrierelementen 132 angeordnet, wodurch vorteilhaft eine optimale Zentrierung bei der elektrischen Verbindung gewährleistet werden kann.

Zudem ist die Schwenkeinheit 110, insbesondere das Schwenkelement 126 der Schwenkeinheit 110, derart angeordnet, dass ein Abstand As der Schwenkeinheit 110 von der elektrischen Schnittstelle 136, insbesondere von den elektrischen Kontaktelementen 140 der elektrischen Schnittstelle 136, größer als ein Abstand Az der Zentriereinheit 130 von der elektrischen Schnittstelle 136 ausgebildet ist. Bei diesen Abständen handelt es sich beispielhaft um minimale Abstände.

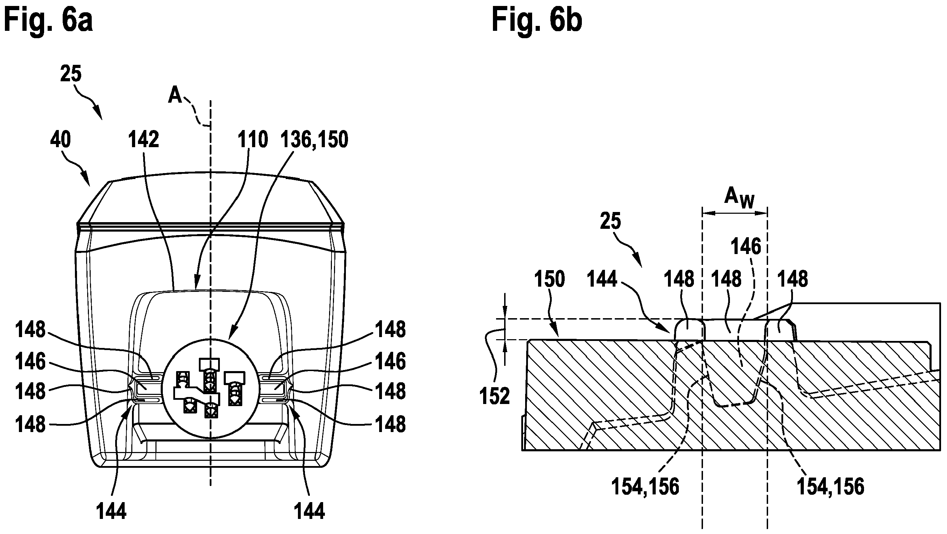

In Fig. 6a ist der Akkupack 25 in einer Hinteransicht gezeigt. Der Akkupack 25 weist ein Schwenkelement 142 auf, welches zu dem Schwenkelement 126 der zweiten Baugruppe 104 korrespondiert und der Schwenkeinheit 110 der Verbindungsvorrichtung 100 zugeordnet ist. Das Schwenkelement 142 des Akkupacks 25 ist beispielhaft an das Gehäuse 40 des Akkupacks 25 als Einbuchtung angeformt ausgebildet.

Zudem weist der Akkupack 25 zwei Zentrierelemente 144 auf, die der Zentriereinheit 130 der Verbindungsvorrichtung 100 zugeordnet und korrespondierend zu den Zentrierelementen 132 der zweiten Baugruppe 104 ausgebildet sind. Die Zentrierelemente 144 sind dabei als Ausnehmungen 146 ausgebildet, die von Seitenwänden 148 umschlossen sind. Beispielhaft weisen die Zentrierelemente 144 jeweils drei Seitenwände 148 auf. Die Seitenwände 148 sind beispielhaft einstückig mit dem Gehäuse 40 des Akkupacks 25 ausgebildet. Die Zentrierelemente 144 sind auf gegenüberliegenden Seiten einer Buchse 150 des Akkupacks 25 angeordnet, die wiederum der elektrischen Schnittstelle 136 der Verbindungsvorrichtung 100 zugeordnet sind. Die Buchse 150 des Akkupacks 25 korrespondiert zu dem Stecker 138 der zweiten Baugruppe 104. Die Buchse 150 weist hierzu korrespondierende Kontaktelemente (nicht dargestellt) auf, die beispielhaft als Kontakttulpen ausgebildet sind. Die Buchse 150 ist derart ausgebildet, dass durch die Buchse die Ausnehmung 146 begrenzt wird und sie eine gekürzten Seitenwand entspricht.

In Figur 6b ist ein Seitenschnitt entlang der Ebene A in Figur 6a durch den Akkupack 25 gezeigt, die Buchse 150 ist transparent gezeichnet.

Das Zentrierelement 144 grenzt beispielhaft direkt an der elektrischen Schnittstelle 136, insbesondere der Buchse 150, an. Die Ausnehmung 146 weist auf der der elektrischen Schnittstelle 136 zugewandten Seite keine Seitenwand 148 auf. Die Seitenwände 148 weisen bezogen auf die Buchse 150 einen Überstand 152 auf, wodurch die Seitenwände 148 über die Buchse 150 hinausragen. Die Seitenwände 148 weisen im Bereich des Überstands 152 einen größeren Abstand A_{W} auf, der sich mit zunehmender Tiefe verkleinert. Insbesondere ist der Abstand Aw im Bereich des Überstands 152 im Wesentlichen konstant ausgebildet. Innerhalb der Ausnehmung 146 weisen die Seitenwände 148 Führungselemente 154 auf, die beispielhaft als schräge Führungsflächen 156 derart ausgebildet sind, dass sich der Abstand A_{W} der Seitenwände mit zunehmender Tiefe verkleinert.

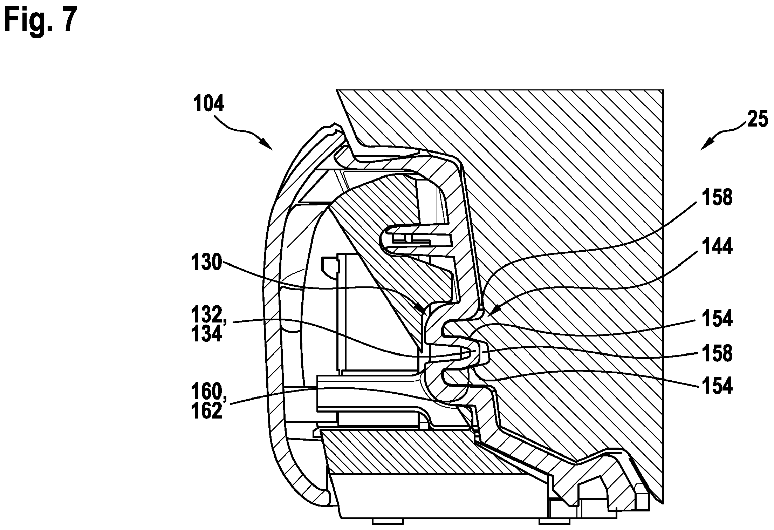

In Fig. 7 ist der Akkupack 25 im mit der zweiten Baugruppe 104 der Verbindungsvorrichtung 100 verbundenen Zustand gezeigt. Der Überstand 152 der Seitenwände 148 ist derart ausgebildet, dass im verbundenen Zustand ein Hohlraum 158 benachbart zu der Zentriereinheit 130 zwischen dem Akkupack 25 und der ersten Baugruppe 104 gebildet wird. Vorteilhaft kann dadurch der Verbindungsprozess erleichtert und der Verschleiß reduziert werden.

Das Zentrierelement 132 der zweiten Baugruppe 104 weist ebenfalls Führungselemente 160 auf, die als schräge Führungsflächen 162 ausgebildet sind. Die schrägen Führungsflächen 162 der Zentrierelemente 132 sind an dem stirnseitigen Ende der Zentrierelemente 132 angeordnet und derart ausgebildet, dass ein Durchmesser der Zentrierelemente 132 in Richtung des stirnseitigen Endes zunimmt, beispielsweise stetig zunimmt. Im verbundenen Zustand liegen somit die Führungselemente 160 der Zentrierelemente 132 der zweiten Baugruppe 104 an den Führungselementen 154 der korrespondierenden Zentrierelemente 144 des Akkupacks 25 an und bilden zusätzliche eine kraftschlüssige Verbindung zwischen dem Akkupack 25 und dem Verbraucher 14, insbesondere der zweiten Baugruppe 104.

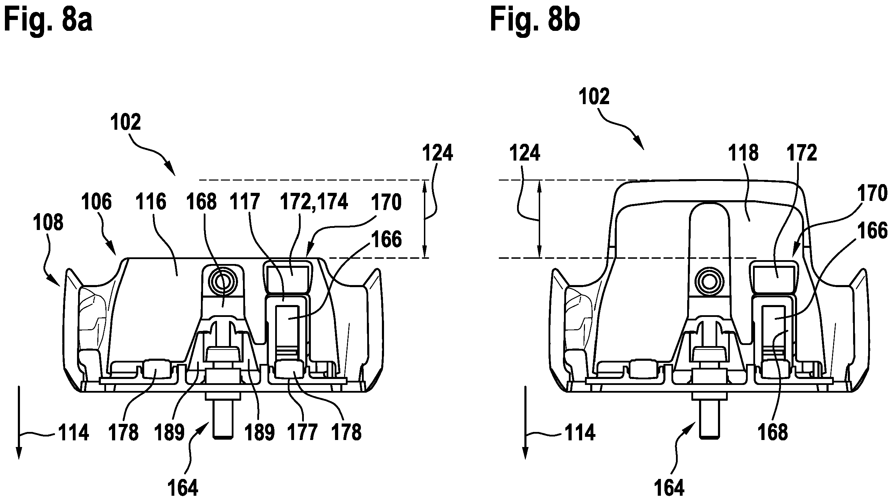

In Figur 8a ist die erste Baugruppe 102 der Verbindungsvorrichtung 100 in einer Vorderansicht gezeigt. Die erste Baugruppe 102 ist mit dem Rahmen 20 des Elektrofahrrads 16 mittels einer Schraubverbindung 164 verbindbar.

Die Verriegelungseinheit 106 der Verbindungsvorrichtung 100 weist das Schloss 108 und ein bewegliches Verriegelungselement 166 auf. Das bewegliche Verriegelungselement 166 ist translatorisch beweglich in einem Verriegelungslager 168 gelagert. Das Schloss 108 ist ebenfalls im Verriegelungslager 168 aufgenommen und mit dem beweglichen Verriegelungselement 166 derart gekoppelt, dass durch Betätigung des Schlosses 108 die Position des beweglichen Verriegelungselements 166 einstellbar ist. Das Verriegelungslager 168 ist aus einem metallischen Werkstoff ausgebildet. Das Verriegelungslager 168 ist über die Schraubverbindung 164 mit dem Rahmen 20 des Elektrofahrrads 16 verbunden. Das bewegliche Verriegelungselement 166 besteht ebenfalls beispielhaft aus einem metallischen Werkstoff.

Das erste Verbindungsvorrichtungsgehäuseteil 116 ist beispielhaft mit dem Verriegelungslager 168 verschraubt und umschließt das Verriegelungslager 168, das Schloss 108 und das bewegliche Verriegelungselement 166 zumindest teilweise. Zudem umfasst die erste Baugruppe 102, insbesondere das erste Verbindungsvorrichtungsgehäuseteil 116, eine Funktionseinheit 170, die beispielhaft in Form eines Diebstahlschutzelements 172 ausgebildet ist. Das Diebstahlschutzelement 172 ist beispielhaft einstückig mit dem ersten Verbindungsvorrichtungsgehäuseteil 116 ausgebildet. Das Diebstahlschutzelement 172 ist beispielhaft als eine Labyrinthgeometrie 174 ausgebildet. Das Diebstahlschutzelement 172 ist entgegen der Verbindungsrichtung 114 oberhalb, insbesondere unmittelbar oberhalb, des beweglichen Verriegelungselements 166 angeordnet. Durch das Diebstahlschutzelement 172 wird der Zugang zu dem beweglichen Verriegelungselement 166 von außen erschwert, indem die Strecke im Spalt zwischen dem Akkupack 25 und der ersten Baugruppe 102 verlängert und verwinkelt wird.

Zudem weist die Verbindungsvorrichtung 100 eine Dämpfungseinheit 176 auf. Die Dämpfungseinheit 176 umfasst beispielhaft zwei erste Dämpfungselemente 178 die zur Dämpfung entlang der Verbindungsrichtung 114 vorgesehen sind. Die ersten Dämpfungselemente 178 sind beispielhaft aus einem elastischen Kunststoff, insbesondere aus einem Gummi, ausgebildet. Die ersten Dämpfungselemente 178 sind beispielhaft in einer Aufnahme 177 des Verriegelungslagers 168 aufgenommen. Die ersten Dämpfungselemente 178 sind auf der gleichen Höhe und unmittelbar unterhalb des beweglichen Verriegelungselements 166 angeordnet. Das bewegliche Verriegelungselement 166 ist beispielhaft außermittig angeordnet, was durch den Aufbau des Schlosses 108 bedingt ist. Durch ein nicht dargestelltes alternatives erstes Verbindungsvorrichtungsgehäuseteil kann das Schloss 108 auch auf der gegenüberliegenden Seite mit einem alternativen Verriegelungslager (nicht dargestellt) montiert werden, wobei das bewegliche Verriegelungselement 166 auch über einem ersten Dämpfungselement 178 angeordnet ist. Das erste Verbindungsvorrichtungsgehäuseteil 116 weist eine Aussparung 117 für das bewegliche Verriegelungselement 166 auf. Es ist ebenso denkbar, dass das erste Verriegelungselement 166 zwei Aussparungen 117 für zwei mögliche Positionierungen des Schlosses 108 beziehungsweise des beweglichen Verriegelungselements 166 und zwei Diebstahlschutzelemente 172 aufweist. Es ist ebenso denkbar, dass die Verriegelungseinheit 106 zwei bewegliche Verriegelungselemente 166 aufweist, was den Diebstahlschutz weiter verbessern würde.

In Figur 8b ist die erste Baugruppe 102 alternativ zu dem ersten Verbindungsvorrichtungsgehäuseteil 116 mit dem zweiten Verbindungsvorrichtungsgehäuseteil 118 in einer Vorderansicht gezeigt. Die Höhendifferenz 124 erstreckt sich dabei im Wesentlichen entlang der Verbindungsrichtung 114 und insbesondere senkrecht zu einer Verriegelungsrichtung 167, entlang der das bewegliche Verriegelungselement 166 bewegbar ist.

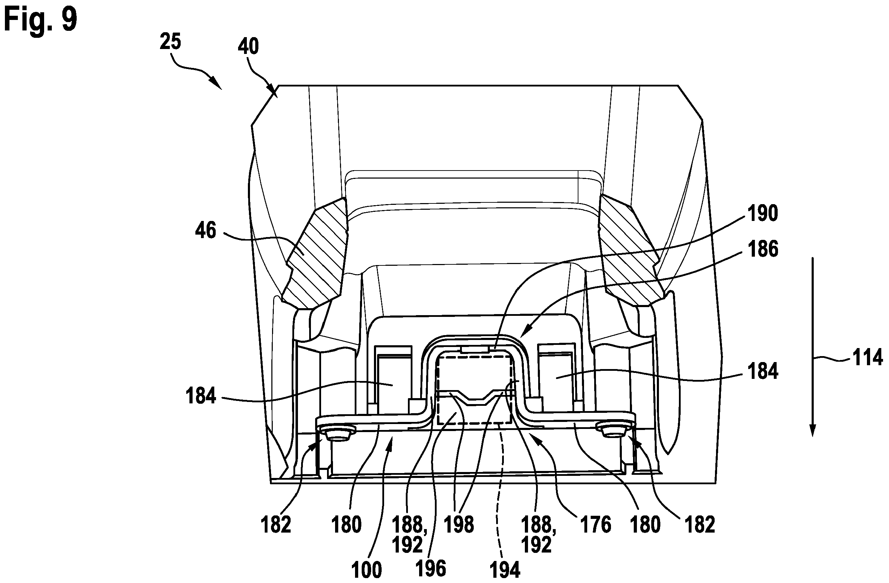

In Figur 9 ist der Akkupack 25 in einem Teilschnitt von vorne gezeigt, wobei der Griff 46 geschnitten ist. Der Akkupack 25 weist beispielhaft zwei starre Verriegelungselemente 180 auf, die der Verbindungsvorrichtung 100 zugeordnet ist. Die zwei starren Verriegelungselemente 180 sind dabei jeweils für eine von zwei möglichen Anordnungen des beweglichen Verriegelungselements 166 wie zuvor beschrieben vorgesehen. Die zwei starren Verriegelungselemente 180 sind aus einem metallischen Werkstoff ausgebildet. Insbesondere sind die beiden starren Verriegelungselemente 180 einstückig miteinander ausgebildet. Die beiden starren Verriegelungselemente 180 sind dabei beispielhaft mittels einer Schraubverbindung 182 mit dem Gehäuse 40 des Akkupacks verschraubt und lösbar verbunden.

Zudem weist der Akkupack 25 zwei Verriegelungselementaufnahmen 184 auf, die zur Aufnahme des beweglichen Verriegelungselements 166 im verbundenen Zustand vorgesehen ist.

Die beiden starren Verriegelungselemente 180 sind über eine Brücke 186 miteinander verbunden, wobei die Brücke 186 insbesondere einstückig mit den starren Verriegelungselementen 180 ausgebildet ist. Die Brücke 186 umfasst zwei Beine 188, die sich ausgehend von den starren Verriegelungselementen 180 entgegen der Verbindungsrichtung 114 nach oben erstrecken und über einen Verbindungssteg 190 miteinander verbunden sind. Der Verbindungssteg 190 dabei kürzer als ein Abstand zwischen den starren Verriegelungselementen 180 ausgebildet, sodass die Beine 188 in Richtung des Verbindungsstegs 190 aufeinander zulaufen. Durch die schräge Führung sind die Beine 188 zusätzlich als Zentrierelemente 192 ausgebildet, die den Akkupack 25 im Verbindungsprozess zentrieren.

Die erste Baugruppe 102 weist dementsprechend zwei zu den Beinen 188 korrespondierende Zentrierelemente 189 auf. Diese bilden beispielhaft teilweise einen Schraubdom für die Schraubverbindung 164 der Verbindungsvorrichtung 100 zu dem Rahmen 20 des Elektrofahrrads 16. Die Zentrierelemente 189 sind beispielhaft einstückig mit dem Verriegelungslager 168 ausgebildet sind.

Die Brücke 186 spannt einen Raum 194 auf, der im Wesentlichen vollständig von einem zweiten Dämpfungselement 196 der Dämpfungseinheit 176 ausgefüllt ist. Alternativ ist auch denkbar, dass das zweite Dämpfungselement 196 den Raum 194 nur teilweise ausfüllt. Das zweite Dämpfungselement 196 ist zur Dämpfung des Akkupacks 25 insbesondere entlang der Längserstreckung 60 des Akkupacks 25 ausgebildet. Das zweite Dämpfungselement 196 wird mittels der starren Verriegelungselemente 180 am Akkupack 25 montiert. Das zweite Dämpfungselement 196 ist beispielhaft aus einem elastischen Kunststoff ausgebildet. Das zweite Dämpfungselement 196 kann aus dem gleichen Material wie das erste Dämpfungselement 178 ausgebildet sein. Zur Verbesserung der Zentrierung weist das zweite Dämpfungselement 196 zwei Eischnitte 198 auf, die zur Aufnahme der Zentrierelemente 189 der ersten Baugruppe 102 ausgebildet sind.

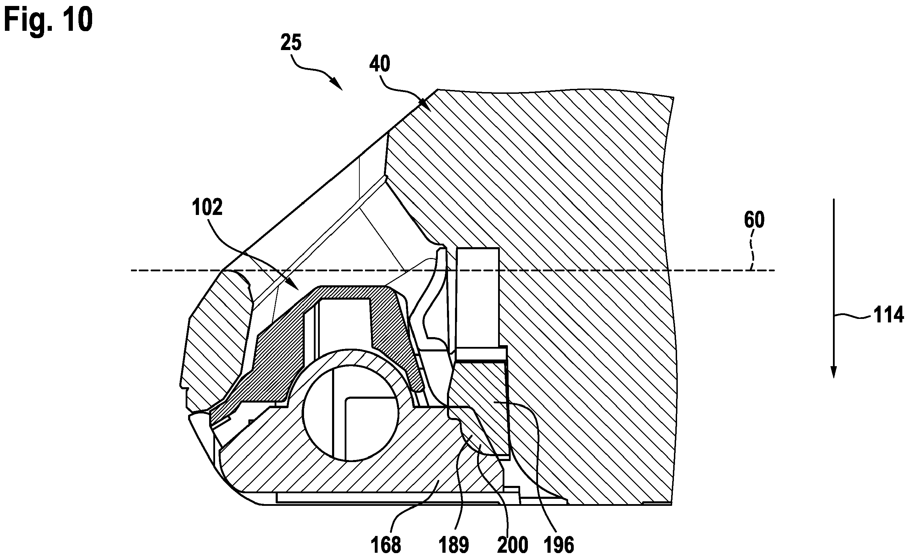

In Figur 10 ist die erste Baugruppe 102 und der Akkupack 25 in einem Längsschnitt durch das zweite Dämpfungselement 196 im verbundenen Zustand gezeigt.

Während des Verbindungsvorgangs kommt das zweite Dämpfungselement 196 gegen die erste Baugruppe 102, insbesondere das Verriegelungslager 168, beispielhaft gegen das Zentrierelement 189 des Verriegelungslagers 168 zum Anliegen und wird derart mit einer Kraft beaufschlagt, dass das zweite Dämpfungselement 196 elastisch verformt wird. Die Verformung erfolgt beispielhaft entgegen der Verbindungsrichtung 114 und entlang der Längserstreckung 60 des Akkupacks 25 im verbundenen Zustand.

Das zweite Dämpfungselement 196 ist dabei im unverformten Zustand gezeichnet, wobei der im verbundenen Zustand verformte Bereich 200 mit dem Verriegelungslager 168 überlappt. Das zweite Dämpfungselement 196 ist derart ausgebildet, dass es im durch die erste Baugruppe 102, insbesondere durch das Verriegelungslager 168, beaufschlagten Bereich in Richtung des Akkupacks 25 zwischen 10 % und 50% gestaucht wird.

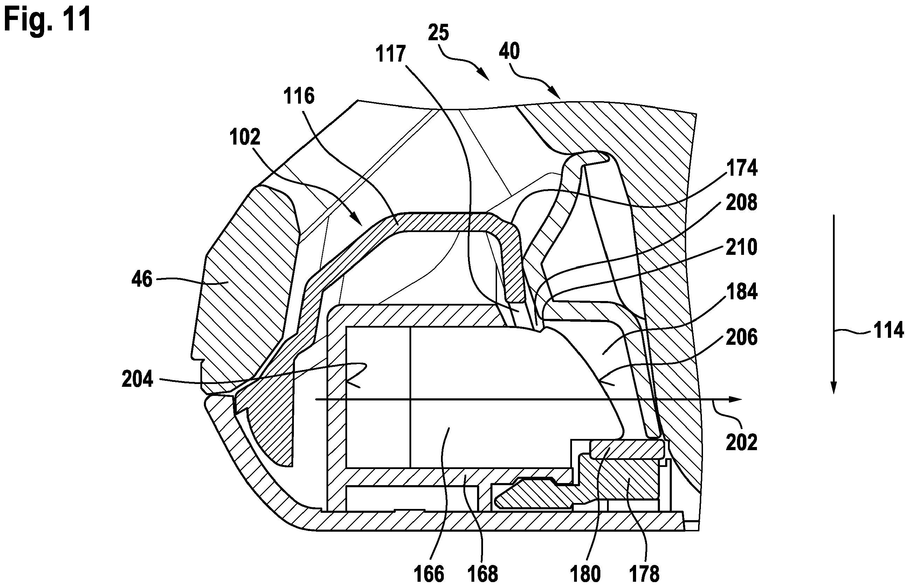

In Figur 11 ist die erste Baugruppe 102 und der Akkupack 25 in einem Längsschnitt durch das bewegliche Verriegelungselement 166 im verbundenen Zustand gezeigt.

Das bewegliche Verriegelungselement 166 ist in der Verriegelungsposition angeordnet, wobei das bewegliche Verriegelungselement 166 in der Verriegelungsposition maximal aus der ersten Baugruppe 102, insbesondere aus dem Verriegelungslager 168, herausragt. Während des Verbindungsprozesses drückt das starre Verriegelungselement 180 auf das bewegliche Verriegelungselement 166 mit einer entgegen der Verriegelungsrichtung 202 gerichteten Kraft, wodurch das bewegliche Verriegelungselement 166 in das Verriegelungslager 168 hineingedrückt wird und das starre Verriegelungselement 166 an dem beweglichen Verriegelungselement 166 vorbeigeschoben werden kann.

Durch Betätigung des Schlosses 108 ist das bewegliche Verriegelungselement 166 entgegen einer Verriegelungsrichtung 202 in die erste Baugruppe 102, insbesondere in das Verriegelungslager 168, einziehbar ausgebildet, wobei die Bewegung durch einen Anschlag 204 im Verriegelungslager 168 begrenzt ist. Die Verriegelungsrichtung 202 ist beispielhaft im verbundenen Zustand parallel zu der Längserstreckung 60 des Akkupacks 25 ausgebildet.

Im verbundenen Zustand ist das bewegliche Verriegelungselement 166 teilweise in der Aufnahme 184 des Akkupacks 25 angeordnet. Das bewegliche Verriegelungselement 166 liegt beispielhaft zudem an dem starren Verriegelungselement 180 an. Das erste Dämpfungselement 178 ist dabei entlang der Verbindungsrichtung 114 betrachtet derart angeordnet, dass das erste Dämpfungselement 178 zwischen dem starren Verriegelungselement 180 und dem Verriegelungslager 168 angeordnet ist und insbesondere derart anliegt, dass das erste Dämpfungselement 178 gestaucht ist und eine Kraft in Richtung des starren Verriegelungselements 180 ausübt. Vorteilhaft entsteht dadurch eine kraftschlüssige Verbindung des bewegliche Verriegelungselement 166 und des starren Verriegelungselements 180 miteinander entgegen der Verbindungsrichtung 114.

Das bewegliche Verriegelungselement 166 ist derart ausgebildet, dass es sich in Verbindungsrichtung 114 nach außen erstreckt und eine konvexe Führungsfläche 206 aufweist. In der gezeigte Verriegelungsposition erstreckt sich die die konvexe Führungsfläche 206 in Verriegelungsrichtung 202 nur teilweise über die Außenfläche des bewegliche Verriegelungselements 166.

Entgegen der Verriegelungsrichtung 202 zurückgesetzt weist das bewegliche Verriegelungselement 166 eine Aussparung 208 auf, die in Verbindungsrichtung 114 in das bewegliche Verriegelungselement 166 hineinragt. Durch die Aussparung 208 wird eine Verriegelungsanschlag 210 gebildet, der entgegen der Verbindungsrichtung 114 nach oben ragt.

Der Verriegelungsanschlag 210 und die Labyrinthgeometrie 174 des ersten Verbindungsvorrichtungsgehäuseteils 116 sind einem Diebstahlschutz zugeordnet. Vorteilhaft wird durch diese Ausbildung ein Zugang zur Betätigung des beweglichen Verriegelungselements 166 entgegen der Verriegelungsrichtung 202 durch ein schmales Werkzeug im Bereich zwischen dem Akkupack 25 und der ersten Baugruppe 102 wirksam verhindert.

## Patentansprüche

1. Verbindungsvorrichtung zur Verbindung eines Akkupacks (25) mit einem Verbraucher (14), mit einer Verriegelungseinheit (106) zur Verriegelung des Akkupacks (25) mit dem Verbraucher (14), wobei die Verriegelungseinheit (106) zumindest ein insbesondere starres Verriegelungselement (180) und ein bewegliches Verriegelungselement (166) aufweist, und mit einer Dämpfungseinheit (176), wobei die Dämpfungseinheit (176) zumindest ein erstes Dämpfungselement (178) aufweist, das zur Dämpfung entlang einer Verbindungsrichtung (114) des Akkupacks (25) ausgebildet ist,
**dadurch gekennzeichnet, dass**
die Dämpfungseinheit (176) zumindest ein zweites Dämpfungselement (196) aufweist, das zur Dämpfung des Akkupacks (25) ausgebildet ist.

2. Verbindungsvorrichtung nach Anspruch 1, **dadurch gekennzeichnet, dass** das erste Dämpfungselement (178) und das zweite Dämpfungselement (196) beabstandet voneinander angeordnet sind.

3. Verbindungsvorrichtung nach einem der vorhergehenden Ansprüche, **dadurch gekennzeichnet, dass** das erste Dämpfungselement (178) dazu ausgebildet ist, im verbundenen Zustand das starre Verriegelungselement (180) mit einer Kraft in Richtung des beweglichen Verriegelungselements (166) zu beaufschlagen.

4. Verbindungsvorrichtung nach einem der vorhergehenden Ansprüche, **dadurch gekennzeichnet, dass** die Verbindungsvorrichtung (100) zumindest zwei starre Verriegelungselemente (180) und zumindest zwei erste Dämpfungselement (178) aufweist.

5. Verbindungsvorrichtung nach Anspruch 4, **dadurch gekennzeichnet, dass** das zweite Dämpfungselement (196) zwischen den zwei ersten Dämpfungselementen (178) angeordnet ist.

6. Verbindungsvorrichtung nach einem der vorhergehenden Ansprüche, **dadurch gekennzeichnet, dass** die starren Verriegelungselemente (180) über eine insbesondere entgegen der Verbindungsrichtung (144) gerichtete Brücke (186) miteinander verbunden sind.

7. Verbindungsvorrichtung nach Anspruch 6, **dadurch gekennzeichnet, dass** die Brücke (186) zwei Beine (188) und einen Verbindungssteg (190) aufweist, wobei die Beine (188) als Zentrierungselemente (189) ausgebildet sind.

8. Verbindungsvorrichtung nach einem der Ansprüche 6 oder 7, **dadurch gekennzeichnet, dass** ein von der Brücke (186) aufgespannter Raum (194) vorzugsweise vollständig von dem zweiten Dämpfungselement (196) ausgefüllt ist.

9. Verbindungsvorrichtung nach einem der vorhergehenden Ansprüche, **dadurch gekennzeichnet, dass** das bewegliche Verriegelungselement (166) sich in Verbindungsrichtung (114) nach außen streckt und/oder wölbt und/oder bereichsweise zumindest teilweise eine konvexe Führungsfläche (206) aufweist.

10. Verbindungsvorrichtung nach einem der vorhergehenden Ansprüche, **dadurch gekennzeichnet, dass** das bewegliche Verriegelungselement (166) eine Aussparung (208) zum Diebstahlschutz aufweist, die insbesondere in Verbindungsrichtung (114) gerichtet ist.

11. Verbindungsvorrichtung nach einem der Ansprüche 9 oder 10, **dadurch gekennzeichnet, dass** die Aussparung (208) in Verriegelungsrichtung (202) vor der konvexe Führungsfläche (196) angeordnet ist.

12. Verbindungsvorrichtung nach einem der vorhergehenden Ansprüche, **dadurch gekennzeichnet, dass** die Verbindungsvorrichtung (100) einen Grundkörper (102) aufweist, wobei der Grundkörper (102) eine Labyrinthgeometrie (174) aufweist, die sich entgegen der Verbindungsrichtung (114) nach außen erstreckt.

13. Verbindungsvorrichtung nach einem der vorhergehenden Ansprüche, **dadurch gekennzeichnet, dass** das zweite Dämpfungselement (196) zumindest eine Aufnahme (198) für ein Zentrierungselement (189) aufweist.

14. Akkupack mit einer Verbindungsvorrichtung (100) nach einem der vorhergehenden Ansprüche.

15. Verbraucher, insbesondere Elektrofahrrad (16), mit einer Verbindungsvorrichtung (100) nach einem der Ansprüche 1 bis 13.
